# EUROPÄISCHE PATENTSCHRIFT

(11) **EP 2 107 231 B1**
(45) Veröffentlichungstag und Bekanntmachung des Hinweises auf die Patenterteilung: **01.12.2010**
(21) Anmeldenummer: 09152882.8
(22) Anmeldetag: 16.02.2009
(51) Int. Cl.: F02M 25/07, F02D 9/10, F16K 41/00

(54) **Ventil, insbesondere zur Steuerung von Abgasen bei Brennkraftmaschinen**
Valve, in particular for controlling exhaust gases in combustion engines
Soupape, notamment pour la commande de gaz d'échappement dans des moteurs à combustion interne

(30) Priorität: 01.04.2008 DE 102008016727
(43) Veröffentlichungstag der Anmeldung: 07.10.2009
(73) Patentinhaber: Pierburg GmbH, 41460 Neuss (DE)
(72) Erfinder: Sari, Osman, 41516 Grevenbroich (DE); Vitt, Stefan, 41472 Neuss (DE)
(74) Vertreter: Patentanwälte ter Smitten

(56) Entgegenhaltungen:
- EP-A- 0 740 064
- EP-A- 1 426 589
- WO-A-01/00982
- US-A- 3 938 541

## Beschreibung

Die Erfindung betrifft ein Ventil, insbesondere zur Steuerung von Abgasen bei Brennkraftmaschinen, mit einem Gehäuse, in dem eine elektromagnetische Antriebseinheit angeordnet ist, die auf eine Ventilstange wirkt, die in einer Ventilstangenführung beweglich geführt ist und an dem von der Antriebseinheit abgewandten Ende ein Ventilverschlussglied aufweist, das in einem Strömungskanal mit einem Ventilsitz zusammenwirkt, wobei ein Innenraum des Gehäuses durch ein Dichtungselement gegenüber dem Strömungskanal abgedichtet ist und eine Entlüftungsbohrung zur Atmosphäre besitzt.

Ein derartiges Ventil ist aus der WO 01/00982 A1 bekannt. Diese Druckschrift beschreibt ein Abgasrückführventit, mit einem Gehäuse, in dem ein elektromagnetischer Antrieb angeordnet ist, der derart auf eine Ventilstange wirkt, dass ein Abgasrückführkanal geöffnet oder geschlossen wird. Die Ventilstange mit dem Ventilverschlussglied ist in einer Ventilstangenführung geführt. Außerdem ist eine Dichtung vorgesehen, die verhindern soll, dass Abgas aus dem Strömungskanal in den Innenraum des Ventilgehäuses entweicht. Darüber hinaus besitzt das Gehäuse auch noch eine Entlüftungsbohrung, die verhindern soll, dass sich im unteren Teil des Ventilgehäuses ein zu hoher Gasdruck aufbaut. Die abgedichtete Ventilstangenführung gestaltet sich im vorliegenden Fall jedoch montagetechnisch sehr kompliziert, wobei auch in der Druckschrift die Möglichkeit genannt wird, dass Abgase über die Entlüftungsbohrung in den Außenbereich des Ventils gelangen.

Aus der EP 1426 589 A2 ist eine Abgasrückführeinrichtung bekannt, die an der zum Strömungskanal gerichteten Seite der Lagerung einen Freiraum aufweist, der mit einer extern angeordneten Unterdruckquelle verbunden ist, um eine Verunreinigung insbesondere der Lagerung zu verhindern.

Der Erfindung liegt daher die Aufgabe zugrunde, ein Ventil der oben genannten Art zu verschaffen, das auf einfache und kostengünstige Weise montiert werden kann und einen sicheren störungsfreien Betrieb gewährleistet.

Diese Aufgabe wird dadurch gelöst, dass die Ventilstangenführung Aussparungen aufweist, die derart dimensioniert und voneinander beabstandet sind, dass sie in jedem Einbanzustand mit der Entlüftungsbohrung in Verbindung stehen. Durch diese besondere Ausführung der Ventilstangenführung ist in jedem Zustand gewährleistet, dass der gesamte Innenraum des Gehäuses in jedem Zustand druckentlastet ist. Dies ist insbesondere hinsichtlich der empfindlichen im oberen Teil des Gehäuses angeordneten Elektronik wichtig. Auch muss während der Montage nicht darauf geachtet werden, wie die Ventilstangenführung in das Gehäuse eingesetzt wird. In jedem Einbauzustand ist nämlich eine Verbindung einer Aussparrung zu der Entlüftungsbohrung gewährleistet. Eine besonders einfache Ausführungsform wird dadurch verschafft, dass die Aussparungen zur Antriebseinheit geöffnete Langlöcher sind. Dabei ist es vorteilhaft, dass an der von der Antriebseinheit abgewandten Seite der Ventilstangenführung das Dichtungselement angeordnet ist. Um einen definierten Druckausgleich im oberen Teil des Gehäuses zu gewährleisten, kann es vorteilhaft sein, dass die Ventilstange hohl ist und im Bereich der Aussparrung eine Öffnung aufweist. Darüber hinaus kann die Ventilstangenführung auch mehrteilig ausgeführt sein. Dies hat den Vorteil, dass ein Teil der Ventilstangenführung aus Kunststoff herstellbar ist, was wiederum zu Kostenersparnissen führt.

Eine vorteilhafte Ausführungsform ist in der Zeichnung dargestellt, hierin zeigen
- Figur 1: eine erste Schnittansicht eines erfindungsgemäßen Ventils,
- Figur 2: eine zweite Schnittansicht eines erfindungsgemäßen Ventils,
- Figur 3: eine Schnittansicht einer Ventilstangenführung, und
- Figur 4: eine Schnittansicht einer weiteren Ausführungsform des erfindungsgemäßen Ventils.

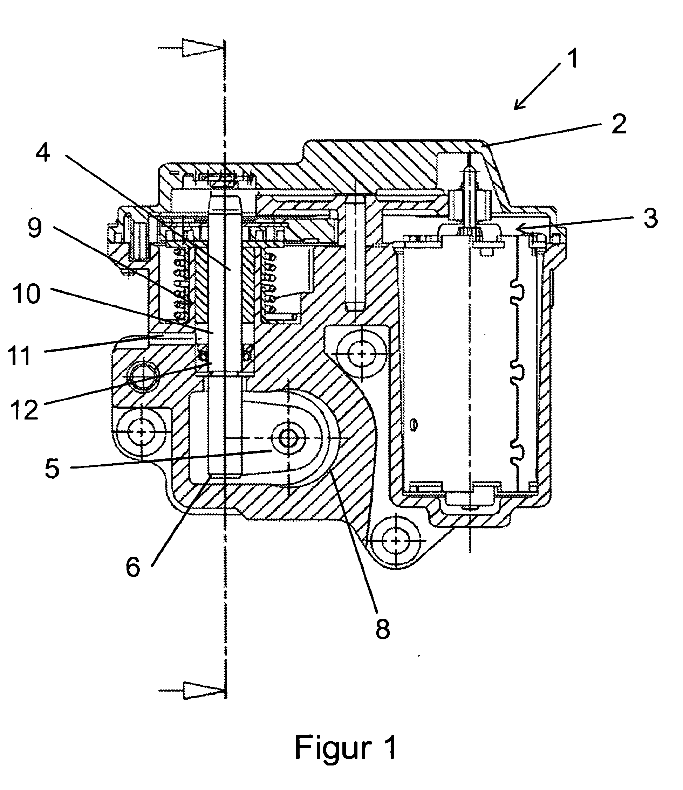

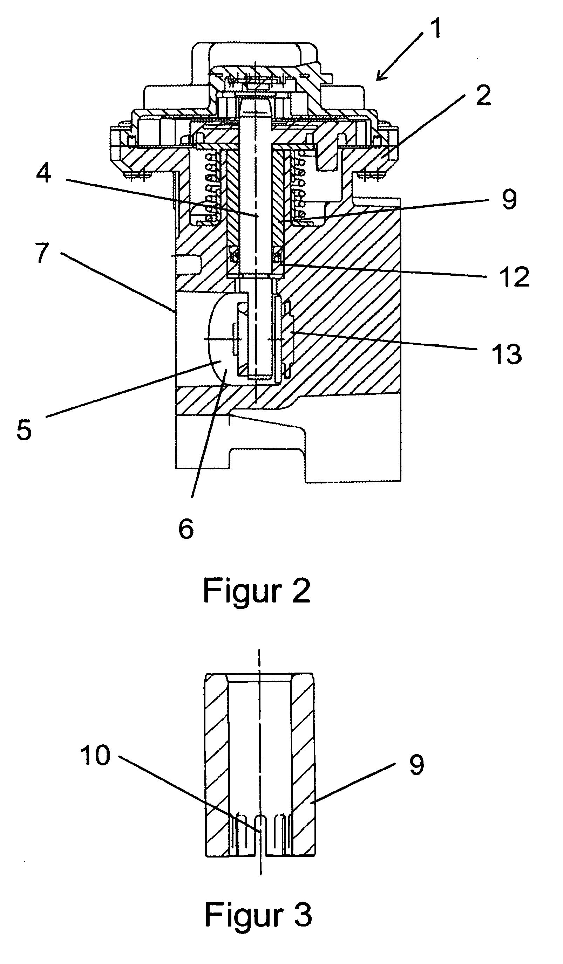

Die Figuren 1 und 2 zeigen ein erfindungsgemäßes Ventil, insbesondere zur Steuerung von Abgasen bei Brennkraftmaschinen. Das Ventil 1 weist ein Gehäuse 2 auf, in dem eine elektromagnetische Antriebseinheit 3, die hier nicht weiter beschrieben wird, angeordnet ist. Die elektromagnetische Antriebseinheit 3 wirkt auf eine Ventilstange 4, die an ihrem von der Antriebseinheit abgewandten Ende ein Ventilverschlussglied 5 besitzt. Das Ventilverschlussglied 5 wirkt mit einem Ventilsitz 13 zusammen und verschließt oder öffnet den Strömungskanal 6, wobei das Abgas über den Eintritt 7 in den Kanal eintritt und ihn über den Austritt 8 verlässt. Die Ventilstange 4 ist in einer Ventilstangenführung 9 beweglich geführt. Die Ventilstangenführung 9 weist dabei Aussparungen 10 auf, die derart dimensioniert und von einander beabstandet sind, dass sie in jedem Einbauzustand mit einer Entlüftungsbohrung 11 in Verbindung stehen.

An der Unterseite der Ventilstangenführung ist eine Dichtung 12 angeordnet, die gewährleistet, dass kein Abgas vom Strömungskanal 6 in den Innenraum des Gehäuses 2 gelangt. Durch die Entlüftungsbohrung 11. die in Kontakt mit der Atmosphäre steht, wird jedoch gewährleistet, dass sich im Innenraum der Abgasdruck, der an der Dichtung 12 anliegt, nicht im Innenraum des Gehäuses wirkt und damit die elektromagnetische Antriebseinheit 3 oder elektronische Bauteile in ihrer Funktion beeinträchtigt.

Für den Fall, dass insbesondere im oberen Teil eine definierte Entlüftung erwünscht ist, kann die Ventilstange 4 als Hohlwelle ausgeführt sein und eine Öffnung aufweisen, die wiederum derart dimensioniert Ist, dass sie in jedem Einbauzustand mit einer Aussparrung der Ventilstangenführung 9 in Wirkverbindung steht.

Figur 3 zeigt nun in einer stark vergrößerten Schnittansicht die Ventilstangenführung 9 aus Figur 1 und 2. Deutlich zu erkennen sind die Aussparungen 10, die im vorliegenden Fall als zur Antriebseinheit hin geöffnete Langlöcher ausgeführt sind. Denkbar ist auch, dass die Dichtung schon vor Montage mit der Ventilstangenführung durch ein geeignetes Fertigungsverfahren verbunden wird.

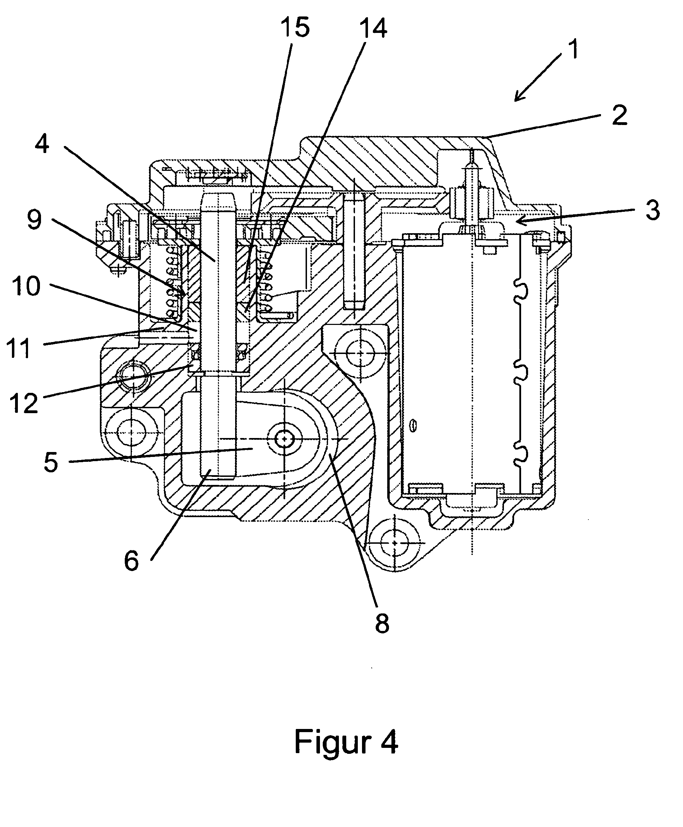

Figur 4 zeigt eine Schnittansicht einer weiteren Ausführungsform des erfindungsgemäßen Ventils. Dabei ist die Ventilstangenführung 9 mehrteilig ausgeführt, zum einen besteht sie aus einem ersten Führungselement 14, das beispielsweise aus Sinterbronze gefertigt ist und das wiederum Langlöcher aufweist, die auf oben beschriebene Art und Weise mit der Entlüftungsbohrung 11 in Verbindung stehen. Das zweite Führungselement 15 ist eine Buchse aus einem anderen Material, beispielsweise Kunststoff. Es sollte deutlich sein, dass hier noch andere Materialkombinationen, je nach Anwendungsfall, möglich sind.

## Patentansprüche

1. Ventil, insbesondere zur Steuerung von Abgas bei Brennkraftmaschinen, mit einem Gehäuse (2), in dem eine elektromagnetische Antriebseinheit (3) angeordnet ist, die auf eine Ventilstange (4) wirkt, die in einer Ventilstangenführung (9) beweglich geführt ist und an dem von der Antriebseinheit (3) abgewandten Ende ein Ventilverschlussglied (5) aufweist, das in einem Strömungskanal (6) mit einem Ventilsitz (13) zusammenwirkt, wobei ein Innenraum des Gehäuses (2) durch ein Dichtungselement gegenüber dem Strömungskanal (6) abgedichtet ist, und eine Entlüftungsbohrung (11) zur Atmosphäre besitzt, **dadurch gekennzeichnet, dass** die Ventilstangenführung (9) Aussparungen (10) aufweist, die derart dimensioniert und voneinander beabstandet sind, dass sie in jedem Einbauzustand mit der Entlüftungsbohrung (11) in Verbindung stehen.

2. Ventil nach Anspruch 1, **dadurch gekennzeichnet, dass** die Aussparungen (10) zur Antriebseinheit (3) geöffnete Langlöcher sind.

3. Ventil nach Anspruch 1 oder 2, **dadurch gekennzeichnet, dass** das an der von der Antriebseinheit (3) abgewandten Seite der Ventilstangenführung (9) das Dichtungselement (12) angeordnet ist.

4. Ventil nach einem der vorherigen Ansprüche, **dadurch gekennzeichnet, dass** die Ventilstange (4) hohl ist und im Bereich der Aussparungen (10) eine Öffnung aufweist.

5. Ventil nach einem der vorstehenden Ansprüche, **dadurch gekennzeichnet, dass** die Ventilstarigenführung (9) aus mehreren Führungselementen (14, 15) besteht.

## Claims

1. A valve, in particular for controlling exhaust gas in internal combustion engines, comprising a housing (2) in which an electromagnetic drive unit (3) is arranged that acts on a valve rod (4) movably guided in a valve rod guide (9) and having a valve closing member (5) at the end averted from the drive unit **(3),** said member cooperating with a valve seat (13) in a flow channel (6), the inner space of the housing (2) being sealed off against the flow channel (6) by means of a sealing element, and comprising a vent bore (11) to the atmosphere, **characterized in that** the valve rod guide (9) has recesses (10) dimensioned and spaced from each other such that they are in communication with the vent bore (11) in any mounting condition.

2. The valve of claim 1, **characterized in that** the recesses **(10)** are elongate holes open to the drive unit (3).

3. The valve of claim 1 or 2, **characterized in that** the sealing element (12) is arranged on the side of the valve rod guide (9) averted from the drive unit (3).

4. The valve of one of the preceding claims, **characterized in that** the valve rod (4) is hollow and has an opening in the region of the recesses (10).

5. The valve of one of the preceding claims, **characterized in that** the valve rod guide (9) comprises a plurality of guide elements (14, 15).

## Revendications

1. Soupape, notamment pour la commande de gaz d'échappement dans des moteurs à combustion interne, comprenant un boitier (2) dans lequel est disposé une unité d'entrainement électromagnétique (3) sollicitant une tige de soupape (4) guidée de manière mobile dans un guide de tige de soupape (9) et comprenant un élément de fermeture de soupape (5) à son extrémité tournée dans la direction opposée à l'unité d'entrainement (3), ledit élément coopérant avec un siège de soupape (13) dans un canal d'écoulement (6), l'espace intérieur du boitier (2) étant étanchéifié par rapport au canal d'écoulement (6) par un élément d'étanchéité, et comprenant un alésage d'aération (11) vers l'atmosphère, **caractérisée en ce que** le guide de la tige de soupape (9) comprend des évidements (10) qui sont dimensionnés et écartés l'un de l'autre, de sorte qu'ils sont en communication avec ledit alésage d'aération (11) dans chaque condition de montage.

2. Soupape selon la revendication 1, **caractérisée en ce que** les évidements (10) sont des trous oblongs ouverts vers l'unité d'entrainement (3).

3. Soupape selon les revendications 1 ou 2, **caractérisée en ce que** ledit élément d'étanchéité (12) est disposé sur le côté dudit guide de la tige de soupape (9) opposé à l'unité d'entrainement (3).

4. Soupape selon l'une quelconque des revendications précédentes, **caractérisée en ce que** la tige de soupape (4) est creuse et comprend une ouverture dans la région des évidements (10).

5. Soupape selon l'une quelconque des revendications précédentes, **caractérisée en ce que** le guide de la tige de soupape (9) est formé par plusieurs éléments de guidage (14, 15).
